# EUROPÄISCHE PATENTANMELDUNG

(11) **EP 4 310 026 A1**
(43) Veröffentlichungstag der Anmeldung: **24.01.2024**
(21) Anmeldenummer: 22186519.9
(22) Anmeldetag: 22.07.2022
(51) Int. Cl.: B65G 1/04, B62D 21/00

(54) **TRANSPORTFAHRZEUG FÜR AUTOMATISIERTE LAGER**

(71) Anmelder: Goya Systec S.R.L., 907015 Agigea (RO)
(72) Erfinder: Gligor, Traian, 63829 Krombach (DE)
(74) Vertreter: Limbeck, Achim

(57) **Zusammenfassung**

Die vorliegende Erfindung betrifft ein Transportfahrzeug (1) für automatisierte Lager, mit einem Fahrzeugkorpus (10), an dem ein oder mehrere Fahrzeugräder und/oder Antriebsräder (11) angeordnet oder anordbar sind, wobei der Fahrzeugkorpus (10) mindestens eine Lastaufnahme (100) umfasst, an dem mindestens ein Lastaufnahmemittel (1000) angeordnet oder anordbar ist und der Fahrzeugkorpus (10) aus mehreren zusammenfügbaren Korpusteilen (101, 102) gebildet ist. Die erfindungsgemäße Transportfahrzeug (1) ist dadurch gekennzeichnet, dass der Fahrzeugkorpus (10) aus mindestens einem aus Kunststoff oder Leichtmetall bestehenden ersten Korpusteil (101) gebildet ist, welches an seiner Unterseite (1010) und/oder an seiner Oberseite mindestens eine Aufnahme (1011) umfasst, wobei der Fahrzeugkorpus (10) mindestens ein zweites Korpusteil (102) umfasst, welches eine gitter-, steg- oder rahmenartige Struktur (1020) umfasst und dessen Strukturstege (10200) derart ausgebildet und innerhalb der Struktur (1020) angeordnet sind, dass sie mit der mindestens einen an dem ersten Korpusteil (101) vorgesehenen Aufnahme (1011) entsprechend korrespondieren, um dort zur Erhöhung der Formstabilität des Fahrzeugkorpus (10) aufgenommen zu werden.

## Beschreibung

### Technisches Gebiet

Die vorliegende Erfindung betrifft ein Transportfahrzeug für automatisierte Lager gemäß dem Oberbegriff des Patentanspruchs 1.

### Stand der Technik

Bei der Verwaltung automatisierter Lagerregalen werden Transportfahrzeuge eingesetzt, welche in verschiedenen Ebenen und Gassen Güter in den Regalfächern hineinbefördern beziehungsweise aus den Regalen herausnehmen können. Die hierfür eingesetzten Transportfahrzeuge bestehen üblicherweise aus einem komplexen Gestell mit einer Vielzahl von Komponenten, welche die Stabilität und die Tragfähigkeit der Fahrzeuge sicherstellen. Ein solches, komplexes Gestell ist üblicherweise metallisch, besteht z.B. aus Profilen, Blechen, Rohren und verwendet eine Vielzahl von Haltern und Verbindungselementen, um verschiedene Elemente, wie z.B. Antriebsräder, Sensoren, Platinen, Kabeln, usw. sicher zu befestigen. Entsprechende Systeme und diesbezügliche Transportfahrzeuge sind beispielsweise in den Druckschriften EP 0 733 563 A1, in EP 2 351 698 B1 sowie in der DE 20 2020 105916 U1 beschrieben.

Die hohe Komplexität eines solchen Gestells der Transportfahrzeuge erfordert erhöhten Montage-Aufwand und wegen dem hohen Metall-Anteil steigt die Masse des Fahrzeugs, was zu einem erhöhten Energie-Konsum führt. Des Weiteren ist die Vielzahl der erforderlichen Elemente im Korpus des Fahrzeugs kostspielig.

### Darstellung der Erfindung

Der vorliegenden Erfindung liegt die Aufgabe zugrunde, die vorgenannten Nachteile zu beseitigen und ein Transportfahrzeug zu schaffen, welches ein möglichst geringes Gewicht aufweist, leicht montierbar, energieeffizient und kostengünstig in seiner Herstellung ist.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen des erfindungsgemäßen Transportfahrzeugs sind in den abhängigen Unteransprüchen angegeben.

Erfindungsgemäß wird die voranstehende Aufgabe dadurch gelöst, dass die Tragfähigkeit und Robustheit des Transportfahrzeugs durch mehrere formoptimierte Korpusteile des Fahrzeugkorpus sichergestellt wird, während zumindest ein aus einem gegenüber dem zweiten Korpusteil leichteren Material bestehendes, erstes Korpusteil mit mindestens einer Aufnahme verwendet wird, welches vorzugsweise durch Funktionsintegration das Anbringen von weiteren Elementen, wie z.B. Elektronik, Sensorik, Kabel, usw. ermöglicht.

Das zweite Korpusteil mit einer gitterartigen Struktur (Gestell bzw. Skelett), welches sich - vorteilhafterweise zumindest bereichsweise form- und/oder kraftschlüssig und/oder zumindest bereichsweise passgenau - in die mindestens eine Aufnahme des ersten Korpusteils einfügt, übernimmt die auf das Transportfahrzeug wirkenden Hauptkräfte, indem es überdies vorzugsweise über eine starre Verbindung zu den Fahrzeugrädern und zu den oberhalb des ersten Korpusteils vorgesehenen bzw. angebrachten Lastaufnahmemitteln verfügt.

Das aus vorteilhafterweise Leichtmetall bestehende, erste Korpusteil umschließt vorzugsweise zumindest teilweise das zweite Korpusteil, so dass an entsprechend erforderlichen Stellen bspw. Befestigungsmöglichkeiten (z.B. Schnappverbindungen) und Stauräume für weitere Elemente geschaffen sein können.

Durch die Funktionsintegration im Fahrzeugkorpus wird die Anzahl der erforderlichen Bauteile und der Verbindungselemente erheblich reduziert. Beim Verwenden eines geeigneten Materials für die mindestens zwei Korpusteile können bspw. Schnappverbindungen für das Befestigen von Bauteilen verwendet werden, was eine Reduzierung des Montageaufwands als Folge hat. Durch die Verwendung einer gitterartigen Struktur aus stabilem Material zur Übernahme der Hauptkräfte und einem ersten Korpusteil aus leichtem Material wird die Gesamtfahrzeug-Masse deutlich reduziert, was zu einer erhöhten Energieeffizienz im Betrieb führt und eine höhere Leistung ermöglicht.

### Kurzbeschreibung der Zeichnungen

Weitere Ziele, Merkmale, Vorteile und Anwendungsmöglichkeiten des erfindungsgemäßen Transportfahrzeugs ergeben sich aus der nachfolgenden Beschreibung eines Ausführungsbeispiels anhand der Zeichnungen.

In den Zeichnungen zeigen
Fig. 1 das erfindungsgemäße Transportfahrzeug in einer vorteilhaften Ausführungsform in perspektivischer Ansicht von der Unterseite;

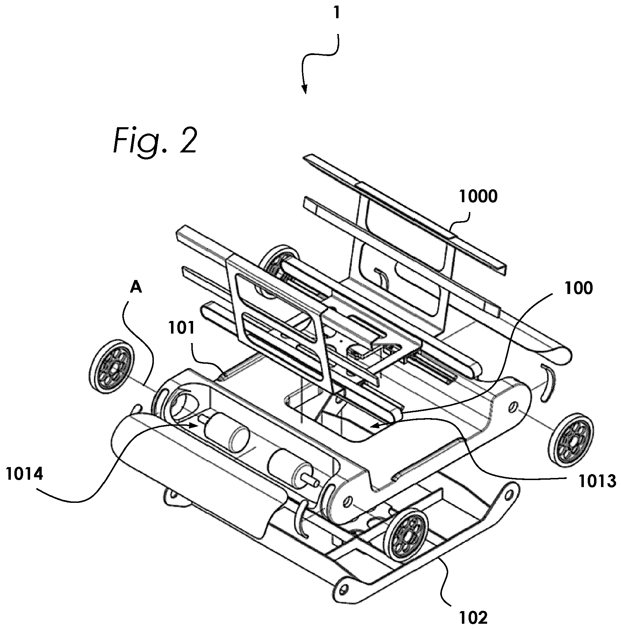

Fig. 2 das erfindungsgemäßen Transportfahrzeug wie in Fig. 1 in einer weiteren perspektivischen Ansicht;

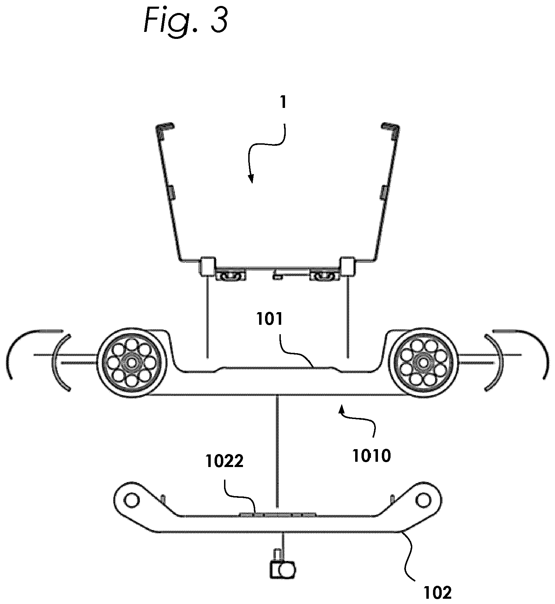

Fig. 3 das erfindungsgemäßen Transportfahrzeug wie in Fig. 1 in der Seitenansicht.

### Ausführung der Erfindung

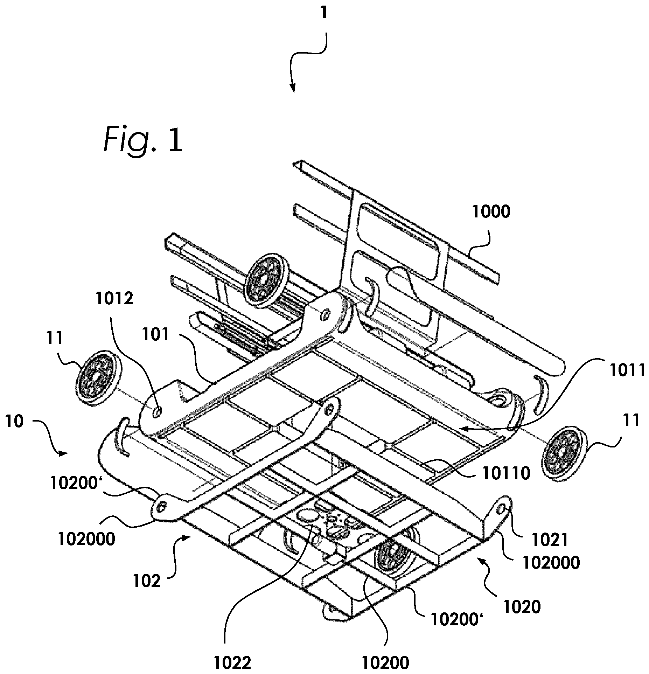

Wie aus Fig. 1 ersichtlich, umfasst die erfindungsgemäße Transportfahrzeug 1 einen Fahrzeugkorpus 10, an dem ein oder mehrere Fahrzeugräder und/oder Antriebsräder 11 angeordnet oder anordbar sind, wobei der Fahrzeugkorpus 10 mindestens eine Lastaufnahme 100 umfasst, an dem mindestens ein Lastaufnahmemittel 1000 angeordnet oder anordbar ist und der Fahrzeugkorpus 10 aus mehreren zusammenfügbaren Korpusteilen 101, 102 gebildet ist.

Das erfindungsgemäße Transportfahrzeug 1 ist dadurch gekennzeichnet, dass der Fahrzeugkorpus 10 aus mindestens einem aus Kunststoff oder Leichtmetall bestehenden ersten Korpusteil 101 gebildet ist, welches an seiner Unterseite 1010 und/oder an seiner Oberseite mindestens eine Aufnahme 1011 umfasst, wobei der Fahrzeugkorpus 10 mindestens ein zweites Korpusteil 102 umfasst, welches eine gitter-, steg- oder rahmenartige Struktur 1020 umfasst und dessen Strukturstege 10200 derart ausgebildet und innerhalb der Struktur 1020 angeordnet sind, dass sie (vorteilhafterweise in ihrer Form und/oder in ihrer Größe und/oder in ihren Abmessungen) mit der mindestens einen an dem ersten Korpusteil 101 vorgesehenen Aufnahme 1011 entsprechend korrespondieren, um dort zur Erhöhung der Formstabilität des Fahrzeugkorpus 10 (vorzugsweise zumindest bereichsweise form- und/oder kraftschlüssig und/oder zumindest bereichsweise passgenau) aufgenommen zu werden.

Als gitter-, steg- oder rahmenartige Struktur 1020 seien nachstehend Strukturen aus mehreren Strukturstegen 10200 verstanden, die bspw. parallel und/oder über kreuz und/oder beanstandet angeordnet sind. Die Strukturstege 10200 können vorzugsweise miteinander verbunden und/oder an einem bspw. flächigen oder sonstigen Gebilde aufgenommen, befestigt oder ausgebildet sein, wobei die Strukturstege 10200 entweder vollständig oder nur teilweise in der mindestens einen Aufnahme 1011 aufgenommen sein können.

Zur Aufnahme der Strukturstege 10200 ist es nicht erforderlich, dass die Strukturstege 10200 oder jeder einzelne Struktursteg 10200 in der mindestens einen Aufnahme 1011 form-, kraftschlüssig oder passgenau aufgenommen ist, sondern es sollte sich durch die Gesamtform der gitter-, steg- oder rahmenartige Struktur 1020 eine entsprechend korrespondierende und vorzugweise form- und/oder kraftschlüssige und/oder passgenaue Verbindung mit der mindestens einen Aufnahme 1011 herstellen lassen, selbst wenn hierzu weitere bzw. zusätzliche Verbindungsmittel erforderlich sein sollten.

In einer besonders vorteilhaften Ausführungsform der Erfindung umfasst die mindestens eine Aufnahme 1011 mehrere sich in Längs- und/oder Querrichtung erstreckende und den Strukturstegen 10200 der Struktur 1020 entsprechend korrespondiere Strukturaufnahmen 10110, in die die Strukturstege 10200 eingebracht werden können.

Die Strukturstege 1020 sind vorzugsweise flach und länglich ausgebildet, wobei es bevorzugt ist, dass auch die entsprechenden Strukturaufnahmen 10110 flach und länglich ausgebildet sind.

In einer besonders vorteilhaften Ausführungsform der Erfindung ist das erste Korpusteil 101 aus einem bezogen auf seine Massendichte leichterem Material als das zweite Korpusteil 102 hergestellt, bspw. aus einem Kunststoff oder Leichtmetall, wohingegen das zweite Korpusteil bspw. aus Stahl gefertigt sein kann. Das zweite Korpusteil 102 kann hierzu zumindest teilweise geschweißt und/oder gegossen sein.

Die mindestens eine Aufnahme 1011 und die entsprechend korrespondiere Struktur 1020 erstrecken sich vorteilhafterweise im Wesentlichen über die gesamte Länge des Transportfahrzeugs 1, wobei als "im Wesentlichen" vorzugsweise jedenfalls etwa mindestens 75% oder zumindest 50% der Länge und/oder Breite des Transportfahrzeugs 1 gemeint ist.

Ganz besonders vorteilhaft ist das erste Korpusteil 101 und/oder das zweite Korpusteil 102 aus einem einzelnen Formteil gebildet, so dass vorzugsweise zwei Korpusteile 101, 102 bestehen, die sodann einfach zusammengesetzt werden. Selbstverständlich ist es auch denkbar, dass der Fahrzeugkorpus 10 aus jeweils einem weiteren ersten und/oder zweiten Korpusteil 101, 102 gebildet ist und die weiteren, jeweils zugehörigen Korpusteile zu einem gemeinsamen Korpusteil 101, 102 zusammengefügt werden können.

Eine weitere bevorzugte Ausführung der Erfindung sieht vor, dass an den beiden Korpusteilen 101, 102 entsprechend korrespondierend ausgebildete Aufnahmen 1012, 1021 zur Anordnung der Fahrzeugräder und/oder Antriebsräder 11 vorgesehen sind.

Weiterhin kann an dem zweiten Korpusteil 102 ein Aufnahme- oder ein Halteteil 1022 ausgebildet sein und an dem ersten Korpusteil 101 eine Öffnung 1013 und/oder eine Aufnahme vorgesehen sein, mittels der das zweite Korpusteils 102 mit der mindestens einen Lastaufnahme 100 fixierbar miteinander verbindbar ist.

In einer weiteren Ausführungsform der Erfindung ist an dem ersten Korpusteil 101 in Längsrichtung wenigstens einer Antriebsachse A mindestens eine Antriebsaufnahme 1014 zur Einbringung mindestens eines motorischen Antriebs ausgebildet und/oder ausgeformt und/oder ausgenommen. Darüber hinaus können an dem ersten Korpusteil 101 auch Funktionsaufnahmen zur Aufnahme für Sensorik, Steuerungselemente, Batterien, Kabel und dergleichen ausgebildet sein.

Mindestens zwei sich in Längsrichtung der Struktur 1020 erstreckende äußere Strukturstege 10200' können zumindest bereichsweise bogen-, c- oder u-förmig ausgebildet sein, wobei an den Ausläufern 102000 der äußeren Strukturstege 10200' die Aufnahmen 1021 zur Anordnung der Fahrzeugräder und/oder Antriebsräder 11 vorgesehen sind.

### Liste der Bezugsziffern

- 1: Transportfahrzeug
- 10: Fahrzeugkorpus
- 11: Fahrzeugräder und/oder Antriebsräder
- 100: Lastaufnahme
- 101: erste Korpusteil
- 102: zweites Korpusteil
- 1000: Lastaufnahmemittel
- 1010: Unterseite des ersten Korpusteils
- 1011: Aufnahme am ersten Korpusteil
- 1012: (Rad-)Aufnahmen am ersten Korpusteil
- 1013: Öffnung und/oder eine Aufnahme am ersten Korpusteil
- 1014: Antriebsaufnahme am ersten Korpusteil
- 1021: (Rad-)Aufnahmen am zweiten Korpusteil
- 1022: Aufnahme- oder Halteteil am zweiten Korpusteil
- 1020: gitter-, steg- oder rahmenartige Struktur am zweiten Korpusteil
- 10110: Strukturaufnahmen am ersten Korpusteil
- 10200: Strukturstege der Struktur
- 10200': äußere Strukturstege
- 102000: Ausläufer der äußeren Strukturstege
- A: Antriebsachse

## Patentansprüche

1. Transportfahrzeug (1) für automatisierte Lager, mit einem Fahrzeugkorpus (10), an dem ein oder mehrere Fahrzeugräder und/oder Antriebsräder (11) angeordnet oder anordbar sind, wobei der Fahrzeugkorpus (10) mindestens eine Lastaufnahme (100) umfasst, an dem mindestens ein Lastaufnahmemittel (1000) angeordnet oder anordbar ist und der Fahrzeugkorpus (10) aus mehreren zusammenfügbaren Korpusteilen (101, 102) gebildet ist,
**dadurch gekennzeichnet, dass**
der Fahrzeugkorpus (10) aus mindestens einem aus Kunststoff oder Leichtmetall bestehenden ersten Korpusteil (101) gebildet ist, welches an seiner Unterseite (1010) und/oder an seiner Oberseite mindestens eine Aufnahme (1011) umfasst, wobei der Fahrzeugkorpus (10) mindestens ein zweites Korpusteil (102) umfasst, welches eine gitter-, steg- oder rahmenartige Struktur (1020) umfasst und dessen Strukturstege (10200) derart ausgebildet und innerhalb der Struktur (1020) angeordnet sind, dass sie mit der mindestens einen an dem ersten Korpusteil (101) vorgesehenen Aufnahme (1011) entsprechend korrespondieren, um dort zur Erhöhung der Formstabilität des Fahrzeugkorpus (10) aufgenommen zu werden.

2. Transportfahrzeug (1) nach Anspruch 1,
**dadurch gekennzeichnet, dass**
die gitter-, steg- oder rahmenartige Struktur (1020) und/oder dessen Strukturstege (10200) derart ausgebildet und innerhalb der Struktur (1020) angeordnet sind, dass sie in der mindestens einen an dem ersten Korpusteil (101) vorgesehenen Aufnahme (1011) zumindest bereichsweise form- und/oder kraftschlüssig und/oder passgenau aufgenommen ist/sind.

3. Transportfahrzeug (1) nach Anspruch 1 oder 2,
**dadurch gekennzeichnet, dass**
die mindestens eine Aufnahme (1011) mehrere sich in Längs- und/oder Querrichtung erstreckende und den Strukturstegen (10200) der Struktur (1020) entsprechend korrespondiere Strukturaufnahmen (10110) umfasst.

4. Transportfahrzeug (1) nach einem der vorangegangenen Ansprüche,
**dadurch gekennzeichnet, dass**
die Strukturstege (1020) flach und länglich ausgebildet sind.

5. Transportfahrzeug (1) nach Anspruch 4,
**dadurch gekennzeichnet, dass**
die Strukturaufnahmen (10110) flach und länglich ausgebildet sind.

6. Transportfahrzeug (1) nach einem der vorangegangenen Ansprüche,
**dadurch gekennzeichnet, dass**
das erste Korpusteil (101) aus einem bezogen auf seine Massendichte leichterem Material als das zweite Korpusteil (102) hergestellt ist.

7. Transportfahrzeug (1) nach einem der vorangegangenen Ansprüche,
**dadurch gekennzeichnet, dass**
sich die Aufnahme (1011) und die entsprechend korrespondiere Struktur (1020) im Wesentlichen über die gesamte Länge und/oder Breite des Transportfahrzeugs (1) erstrecken.

8. Transportfahrzeug (1) nach einem der vorangegangenen Ansprüche,
**dadurch gekennzeichnet, dass**
das erste Korpusteil (101) und/oder das zweite Korpusteil (102) aus einem Formteil gebildet ist.

9. Transportfahrzeug (1) nach einem der vorangegangenen Ansprüche,
**dadurch gekennzeichnet, dass**
das zweite Korpusteil (102) zumindest teilweise geschweißt und/oder gegossen ist.

10. Transportfahrzeug (1) nach einem der vorangegangenen Ansprüche,
**dadurch gekennzeichnet, dass**
an den beiden Korpusteilen (101, 102) entsprechend korrespondierend ausgebildete Aufnahmen (1012, 1021) zur Anordnung der Fahrzeugräder und/oder Antriebsräder (11) vorgesehen sind.

11. Transportfahrzeug (1) nach einem der vorangegangenen Ansprüche,
**dadurch gekennzeichnet, dass**
an dem zweiten Korpusteil (102) ein Aufnahme- oder Halteteil (1022) ausgebildet ist und an dem ersten Korpusteil (101) eine Öffnung (1013) und/oder eine Aufnahme vorgesehen ist, mittels der das zweite Korpusteils (102) mit der mindestens einen Lastaufnahme (100) fixierbar miteinander verbindbar ist.

12. Transportfahrzeug (1) nach einem der vorangegangenen Ansprüche,
**dadurch gekennzeichnet, dass**
an dem ersten Korpusteil (101) in Längsrichtung wenigstens einer Antriebsachse (A) mindestens eine Antriebsaufnahme (1014) zur Einbringung mindestens eines motorischen Antriebs ausgebildet und/oder ausgeformt und/oder ausgenommen ist.

13. Transportfahrzeug (1) nach einem der vorangegangenen Ansprüche,
**dadurch gekennzeichnet, dass**
an dem ersten Korpusteil (101) Funktionsaufnahmen zur Aufnahme für Sensorik, Steuerungselemente, Batterien, Kabel und dergleichen ausgebildet sind.

14. Transportfahrzeug (1) nach einem der vorangegangenen Ansprüche,
**dadurch gekennzeichnet, dass**
mindestens zwei sich in Längsrichtung der Struktur (1020) erstreckende äußere Strukturstege (10200') zumindest bereichsweise bogen-, c- oder u-förmig ausgebildet sind.

15. Transportfahrzeug (1) nach Anspruch 14,
**dadurch gekennzeichnet, dass**
an den Ausläufern (102000) der äußeren Strukturstege (10200') die Aufnahmen (1021) zur Anordnung der Fahrzeugräder und/oder Antriebsräder (11) vorgesehen sind.
